# EUROPÄISCHE PATENTSCHRIFT

(11) **EP 3 807 232 B1**
(45) Veröffentlichungstag und Bekanntmachung des Hinweises auf die Patenterteilung: **16.11.2022**
(21) Anmeldenummer: 19728931.7
(22) Anmeldetag: 03.06.2019
(51) Int. Cl.: C05G 3/90

(54) **EMULSION ZUR BEHANDLUNG VON HARNSTOFFHALTIGEN DÜNGEMITTELN**
EMULSION FOR TREATING UREA-CONTAINING FERTILIZERS
ÉMULSION SERVANT À TRAITER DES ENGRAIS À BASE D'URÉE

(30) Priorität: 04.06.2018 DE 102018208770
(43) Veröffentlichungstag der Anmeldung: 21.04.2021
(73) Patentinhaber: EuroChem Agro GmbH, 68165 Mannheim (DE)
(72) Erfinder: MANNHEIM, Thomas, 74547 Untermünkheim (DE); HABERMÜLLER, Heiko, 69469 Weinheim (DE)
(74) Vertreter: Féaux de Lacroix, Stefan
(86) Internationale Anmeldenummer: PCT/EP2019/064251
(87) Internationale Veröffentlichungsnummer: WO 2019/233905

(56) Entgegenhaltungen:
- EP-A1- 3 109 223
- WO-A1-2013/090324
- WO-A2-2013/121384

## Beschreibung

Die Erfindung betrifft eine Emulsion zur Behandlung von harnstoffhaltigen Düngemitteln, enthaltend mindestens ein (Thio)phosphorsäuretriamid und 2-(N-3,4-Dimethylpyrazol)bernsteinsäure, sowie ihre Verwendung und ein Verfahren zur Herstellung von behandelten harnstoffhaltigen Düngemitteln sowie so erhältliche harnstoffhaltige Düngemittel.

Weltweit wird die überwiegende und weiter steigende Menge des für die Düngung verwendeten Stickstoffs in Form von Harnstoff bzw. harnstoffhaltigen Düngemitteln eingesetzt. Harnstoff selbst ist jedoch eine nicht oder kaum aufgenommene Stickstoffform, da er relativ rasch durch das im Boden ubiquitär vorhandene Enzym Urease zu Ammoniak und Kohlendioxid hydrolisiert wird. Dabei wird unter Umständen gasförmiges Ammoniak an die Atmosphäre abgegeben, welches dann nicht mehr im Boden für die Pflanzen zur Verfügung steht, wodurch die Effizienz der Düngung reduziert wird.

Es ist bekannt, dass man die Stickstoffausnutzung beim Einsatz harnstoffhaltiger Düngemittel verbessern kann, indem man harnstoffhaltige Düngemittel zusammen mit Substanzen ausbringt, welche die enzymatische Harnstoffspaltung verringern oder inhibieren können. Zu den potentesten bekannten Urease-Inhibitoren gehören N-Alkylthiophosphorsäuretriamide und N-Alkylphosphorsäuretriamide, welche beispielsweise in EP 0 119 487 beschrieben sind.

Auch Gemische von N-Alkylthiophosphorsäuretriamiden wie N-(n-Butyl)thiophosphorsäuretriamid (NBPT) und N-(n-Propyl)thiophosphorsäuretriamid (NPPT) sind einsetzbar, beispielsweise im Gewichtsverhältnis von NBPT zu NPPT von etwa 3 : 1.

Diese Urease-Inhibitoren sind beispielsweise in der WO 2009/079994 beschrieben. Damit diese Verbindungsklasse als Urease-Hemmstoff wirken kann, muss zunächst eine Umwandlung in die entsprechende Oxoform stattfinden. Anschließend reagiert diese mit der Urease und bewirkt deren Hemmung.

Es empfiehlt sich, die Urease-Hemmstoffe zusammen mit dem Harnstoff auf bzw. in den Boden zu geben, da auf diese Weise sichergestellt wird, dass der Hemmstoff zusammen mit dem Dünger mit dem Boden in Kontakt kommt. Der Wirkstoff kann dabei im Harnstoff inkorporiert sein, beispielsweise, indem er vor der Harnstoff-Granulierung oder der Prillung in die Schmelze eingelöst wird. Eine weitere Möglichkeit besteht darin, den Wirkstoff auf das Harnstoff-Granulat bzw. die Prills aufzutragen, beispielsweise in Form einer Lösung.

Entsprechende Verfahren zur Aufbringung und geeignete Lösungsmittel sind beispielsweise in der EP-A-1 820 788 beschrieben. Als Lösungsmittel werden Wasser, Alkohole, Glykole oder Amine sowie deren Gemische genannt. Zudem wird auf die WO 97/22568 Bezug genommen.

Die WO 97/22568 betrifft verbesserte Formulierungen von N-Alkylthiophosphorsäuretriamiden, die als Urease-Inhibitoren auf Düngemittel aufgebracht werden. Dabei werden sie in einem Glykol oder Glykolderivat gelöst. Insbesondere werden Propylenglykol oder Dipropylenglykol eingesetzt, bei denen es sich um mit Wasser mischbaren Glykole handelt.

Die WO 2009/079994 betrifft Mischungen zur Behandlung von harnstoffhaltigen Düngemitteln, die ebenfalls (Thio)phosphorsäuretriamide enthalten. Sie weisen zudem mindestens eine eine Aminogruppe oder eine substituierte Aminogruppe enthaltende Verbindung von einem Siedepunkt von mehr als 100 °C auf. Auch Lösungsmittel für die (Thio)phosphorsäuretriamide werden beschrieben, u. a. Wasser, Alkohole, Glykole, N-Methyl-2-pyrrolidon (NMP) oder auch Dimethylphthalat (DMP). Die meisten der vorgeschlagenen Lösungsmittel, wie Glykole und NMP, sind gut mischbar mit Wasser. Dimethylphthalat, das gemäß den Beispielen eingesetzt wird, ist schwer löslich in Wasser.

Die EP-A-3 109 223 betrifft Mischungen zur Behandlung von harnstoffhaltigen Düngemitteln. Die synergistische Mischung aus Urease-Inhibitor und Nitrifikationsinhibitor enthält (Thio)phosphorsäuretriamide und 2-(N-3,4-Dimethylpyrazol)bernsteinsäure. Die synergistischen Mischungen werden auf harnstoffhaltige Düngemittel aufgebracht, wobei eine Mischung beider Komponenten weiterhin ein Lösungsmittel für die (Thio)phosphorsäuretriamide enthalten kann. Die Mischungen selbst werden als Additiv oder Beschichtungsmittel für harnstoffhaltige Stickstoffdüngemittel eingesetzt. Als Lösungsmittel werden Wasser, Alkohole, Glykole wie auch NMP oder Dimethylphthalat genannt. Die Art und Reihenfolge der Aufbringung auf das harnstoffhaltige Düngemittel ist nicht näher ausgeführt.

Die WO 2013/121384 betrifft Mischungen zur Verminderung der Emissionen an Ammoniak oder Stickoxiden aus Böden. Die Mischungen enthalten Alkylthiophosphorsäuretriamide und mindestens ein Strobilurin. Sie können zusätzlich Nitrifikationsinhibitoren wie 2-(N-3,4-Dimethylpyrazol)bernsteinsäure oder 3,4-Dimethylpyrazolphosphat enthalten. Auch die Mitverwendung von Lösungsmitteln ist erwähnt. Die in einem organischen Lösungsmittel gelösten Inhaltsstoffe können in Wasser emulgiert werden.

DE 103 17 895 A1 betrifft 1,3,4-Oxa- und 1,3,4-Thiadiazol-2-yl(thio)phosphorsäuretriamide, Verfahren zu ihrer Herstellung und deren Verwendung als Mittel zur Regulierung bzw. Hemmung der enzymatischen Harnstoff-Hydrolyse. In der Beschreibung ist angegeben, dass der Urease Inhibitor wasserlöslich ist. Auf eine problemlose Kombinierbarkeit mit Nitrifikationsinhibitoren wird hingewiesen. Ferner wird angegeben, dass die Urease-Inhibitoren in flüssiger Form, beispielsweise als Lösung, Emulsion oder Supension, oder in fester Form eingesetzt werden können.

WO 2015/104699 A2 betrifft Kombinationen neuer Nitrifikationsinhibitoren mit Fungiziden oder mit (Thio)phosphorsäuretriamiden und Fungiziden. Die Nitrifikationsinhibitoren der Formel (I) weisen eine Alkingruppe auf. Als zusätzliche Nitrifikationsinhibitoren können neben solchen der Formel (I) auch DMPP oder DMPSA eingesetzt werden. Beide Verbindungen sind in einer längeren Liste genannt. Es wird angegeben, dass NBPT oder Nitrifikationsinhibitor als Lösungen, Emulsionen, Suspensionen, Stäube, Pulver, Pasten oder Granulate vorliegen können.

Üblicherweise erfolgt die Aufbringung von (Thio)phosphorsäuretriamiden, wie NBPT und NPPT, und Nitrifikationsinhibitoren, wie 2-(N-3,4-Dimethylpyrazol)bernsteinsäure (DMPSA) oder 3,4-Dimethylpyrazolphosphat (DMPP), auf Düngemittel getrennt. Dies bedeutet, dass die aktiven Substanzen nacheinander in ihren jeweiligen Formulierungen auf Harnstoffgranulat aufgebracht werden. Dieses Vorgehen hat verschiedene Gründe: Formulierungen, die beide aktiven Inhaltsstoffe in einer Lösung enthalten, haben deutliche Nachteile:
Zum einen lassen sich beide Substanzen in wässrigen Medien nicht in der gewünschten Konzentration gemeinsam in Lösung bringen. Dies ist manchen organischen Lösungsmitteln und Gemischen möglich, allerdings erfolgt in derartigen Lösungen eine sehr schnelle Zersetzung beider Wirkstoffe. Eine Beschichtung von harnstoffhaltigen Düngemitteln mit NBPT und DMPSA bzw. DMPP war bislang daher nur über den Umweg einer sequentiellen Aufbringung von Einzelformulierungen möglich. Der Nachteil eines derartigen Vorgehens liegt im großen technischen Aufwand, da zwei Beschichtungsschritte und noch zusätzlich weitere Prozessschritte notwendig sind. Dies führt zu einer deutlich verlängerten Prozessdauer. Ferner müssen Lagerkapazitäten für die Zwischenlagerung des halbfertigen Düngemittels bereitgestellt werden. Weiterhin zeigte sich in Versuchen zur Lagerstabilität, dass sich im fertigen Düngemittel bei der Lagerung die NBPT-Konzentrationen unerwartet schnell verringern.

Aufgabe der vorliegenden Erfindung ist die Bereitstellung einer für die Aufbringung auf harnstoffhaltigen Düngemitteln geeigneten Mischung von Urease-Inhibitoren und Nitrifikationsinhibitoren, die die aufgezeigten Nachteile vermeidet. Zudem soll ein verbessertes Verfahren zur Herstellung von mit Urease-Inhibitor und Nitrifikationsinhibitor behandelten Düngemitteln bereitgestellt werden, das technisch unaufwendig ist und zu behandelten Düngemitteln mit erhöhter Lagerstabilität führt.

Aufgabe der vorliegenden Erfindung ist ferner die Bereitstellung einer Mischung zur Behandlung von harnstoffhaltigen Düngemitteln, insbesondere zur Urease-Hemmung, die nach Aufbringen auf harnstoffhaltige Düngemittel über einen längeren Zeitraum lagerstabil ist, das Durchlaufen verschiedener Distributionsstufen besser überstehen lässt und den auf Harnstoff aufgebrachten Wirkstoff vor einer Zersetzung oder einem Verlust schützt. Die Mischung soll die Aktivität des Wirkstoffs nicht negativ beeinflussen.

Die Aufgaben werden erfindungsgemäß gelöst durch eine Emulsion zur Behandlung von harnstoffhaltigen Düngemitteln, enthaltend eine wässrige Phase B und eine mit Phase B emulgierte nicht-wässrige Phase A,
wobei Phase A mindestens ein (Thio)phosphorsäuretriamid der allgemeinen Formel (I) und/oder (Thio)phosphorsäurediamid der allgemeinen Formel (II)

R¹R²N-P(X)(NH₂)₂ (I)

R¹O-P(X)(NH₂)₂ (II)

mit der Bedeutung
X Sauerstoff oder Schwefel,
R1 und R2 unabhängig voneinander Wasserstoff, jeweils substituiertes oder unsubstituiertes 2-Nitrophenyl, C₁₋₁₀-Alkyl, C₃₋₁₀-Cycloalkyl, C₃₋₁₀-Heterocycloalkyl, C₆₋₁₀-Aryl, C₆₋₁₀-Heteroaryl oder Diaminocarbonyl, wobei R¹ und R² zusammen mit dem sie verbindenden Stickstoffatom auch einen 5- oder 6-gliedrigen gesättigten oder ungesättigten heterocyclischen Rest bilden können, der gegebenenfalls auch ein oder zwei weitere Heteroatome, ausgewählt aus der Gruppe, bestehend aus Stickstoff, Sauerstoff und Schwefel, enthalten kann,
als Komponente A1, gelöst in einem nicht mit Wasser mischbaren organischen Lösungsmittel als Komponente A2, enthält,
   und
wobei Phase B 2-(N-3,4-Dimethylpyrazol)bernsteinsäure, die vorzugsweise als Dialkalisalz, Erdalkalisalz, Diammoniumsalz oder Gemisch davon vorliegt, als Komponente B1, gelöst in Wasser, enthält.

Die Aufgaben werden zudem gelöst durch Verwendung einer derartigen Emulsion als Additiv oder Beschichtungsmittel für harnstoffhaltige Stickstoffdüngemittel.

Die Aufgaben werden zudem gelöst durch ein Verfahren zur Herstellung von behandelten harnstoffhaltigen Düngemitteln, umfassend die Schritte
a) getrenntes Herstellen der Phasen A und B, wie sie vorstehend definiert sind,
b) Vermischen der Phasen A und B aus Schritt a) zur Herstellung einer Emulsion der Phasen A und B,
c) Aufbringen der Emulsion aus Schritt b) auf ein teilchenförmiges harnstoffhaltiges Düngemittel oder Einbringen der Emulsion aus Schritt b) in ein teilchenförmiges harnstoffhaltiges Düngemittel.

Gemäß einer Ausführungsform der Erfindung enthalten die Emulsion und das behandelte harnstoffhaltige Düngemittel kein Strobilurin bzw. sind frei von Strobilurin, wie es beispielsweise in WO 2013/121384 definiert ist.

Die Aufgaben werden zudem erfindungsgemäß gelöst durch ein harnstoffhaltiges Düngemittel, erhältlich nach dem vorstehend beschriebenen Verfahren.

Es wurde erfindungsgemäß gefunden, dass die Beschichtung von harnstoffhaltigen Düngemitteln mit speziellen Urease-Inhibitoren und DMPSA als Nitrifikationsinhibitor in einfacher Weise möglich ist, wenn die beiden Wirkstoffe zunächst getrennt in nicht miteinander mischbaren Lösungsmitteln gelöst werden, sodann eine Emulsion aus beiden Lösungen hergestellt wird, und das harnstoffhaltige Düngemittel mit der so erhaltenen Emulsion behandelt wird.

Es wurde erfindungsgemäß gefunden, dass die so hergestellten harnstoffhaltigen Düngemittel eine wesentlich verbesserte Lagerstabilität bezüglich der Flüchtigkeit der Wirkstoffe haben.

Insbesondere die NBPT-Konzentration bleibt über einen wesentlich längeren Lagerungszeitraum konstant als es nach einer sequenziellen Aufbringung der Wirkstoffe der Fall ist. Dies deutet darauf hin, dass auf der Oberfläche des harnstoffhaltigen Düngemittels die Wirkstoffe in anderer Form angelagert sind als nach dem bekannten Verfahren, so dass auch ein andersartiges behandeltes harnstoffhaltiges Düngemittel resultiert.

Der Einsatz der erfindungsgemäßen Emulsion zur Beschichtung des harnstoffhaltigen Düngemittels führt zu geänderten physikalischen Eigenschaften des Düngemittels.

Damit erlaubt die erfindungsgemäße Emulsion nicht nur eine einfache und effiziente simultane Aufbringung beider Wirkstoffe auf harnstoffhaltige Düngemittel, sondern es resultiert eine deutlich höhere Haltbarkeit des Produktes gegenüber nach vorbekannten Verfahren hergestellten behandelten Düngemitteln.

Im Unterschied zu DMPSA, insbesondere der neutralisierten Form oder Salzform, führt der Einsatz von DMPP anstelle von DMPSA in der erfindungsgemäßen Emulsion und im erfindungsgemäßen Verfahren nicht zu Produkten mit deutlich höherer Haltbarkeit bezüglich des Urease-Inhibitors und Nitrifikationsinhibitors. Insbesondere für die Kombination DMPP/NBPT wurde ein schnelles Abbauverhalten von beiden Substanzen beobachtet, wenn sie in einer der erfindungsgemäßen Emulsion entsprechenden Emulsion eingesetzt wurden.

Die beiden aktiven Substanzen (Thio)phosphorsäuretriamid und/oder (Thio)phosphorsäurediamid als Urease-Inhibitor und DMPSA als Nitrifikationsinhibitor werden in ihren jeweiligen Einzelformulierungen eingesetzt. DMPSA wird in einer wässrigen Lösung eingesetzt, die vorzugsweise einen pH-Wert im Bereich von 6 bis 9, besonders bevorzugt von 7 bis 8, aufweist. Daher wird DMPSA vorzugsweise in neutralisierter Form eingesetzt als Dialkalisalz, Erdalkalisalz, Diammoniumsalz oder Gemisch davon. Der Urease-Inhibitor wird in einem nicht mit Wasser mischbaren organischen Lösungsmittel gelöst und vorzugsweise mit einer eine Aminogruppe oder eine substituierte Aminogruppe enthaltenden Verbindung, insbesondere einem Amin, mit einem Siedepunkt von mehr als 100 °C versetzt. Unter Aminen werden dabei vorzugsweise keine Heterocyclen, wie Pyrazole, oder Dicyandiamid (DCD) verstanden.

Beide Formulierungen, die untereinander nicht mischbar sind, werden in einem bestimmten Mischungsverhältnis zusammengegeben und durch kurzes Vermischen zu einer Emulsion homogenisiert. Diese Emulsion ist üblicherweise nicht zeitstabil, sondern führt schon nach wenigen Minuten des Ruhenlassens wieder zu einer Phasentrennung, insbesondere, wenn kein Dispergierhilfsmittel mitverwendet wird.

Dieses Emulsionsgemisch wird möglichst umgehend nach der Herstellung gleichmäßig auf das harnstoffhaltige Düngemittel aufgebracht, vorzugsweise in einem Mischer unter Bewegung des harnstoffhaltigen Düngemittels. Der Mischvorgang wird vorzugsweise noch einige Minuten nach Beendigung des Auftragens weitergeführt. Ein Trocknen des fertigen behandelten harnstoffhaltigen Düngemittels kann beispielsweise durch Stehenlassen im offenen Sack für mehrere Tage erfolgen. Falls notwendig, kann ein separater Trockenschritt durchgeführt werden.

DMPSA (insbesondere in neutralisierter Form) ist gut wasserlöslich und zerfällt nicht in Wasser. Bei der Behandlung des festen teilchenförmigen harnstoffhaltigen Düngemittels zieht das Wasser schnell in das Düngemittel ein.

Die Emulsion zur Behandlung von harnstoffhaltigen Düngemitteln erlaubt eine synergistische Kombination von Urease-Hemmung und Nitrifikationsinhibierung.

So kann die üblicherweise auftretende zusätzliche Ammoniakemission durch den enthaltenen Nitrifikationsinhibitor DMPSA unterbunden werden.

Im Vergleich zu separat eingesetzten Urease-Inhibitoren und Nitrifikationsinhibitoren kann ein vergleichbarer Effekt mit geringeren Aufwandmengen erreicht werden.

Stickstoffverluste des harnstoffhaltigen Düngemittels bei der Anwendung werden durch die erfindungsgemäße Mischung vermieden.

Das harnstoffhaltige Düngemittel enthält die erfindungsgemäße Emulsion in einer solchen Menge, dass der Gesamtgehalt der Komponenten A und B, bezogen auf den enthaltenen Harnstoff, bevorzugt 0,001 bis 0,5 Gew.-%, vorzugsweise 0,02 bis 0,4 Gew.-%, insbesondere 0,08 bis 0,25 Gew.-% beträgt.

Es wurde erfindungsgemäß gefunden, dass insbesondere 2-(N-3,4-Dimethylpyrazol)bernsteinsäure (auch als DMPSA oder DMPBS bezeichnet) in Mischung mit (Thio)phosphorsäuretriamiden der allgemeinen Formel (I) und/oder (Thio)phosphorsäurediamiden der allgemeinen Formel (II) synergistisch wirksame Gemische zur Behandlung harnstoffhaltiger Düngemittel ergibt.

Die jeweils üblichen Einsatzmengen an Urease-Inhibitor (Komponente A) und Nitrifikationsinhibitor (Komponente B) konnten erfindungsgemäß ohne nennenswerten Wirksamkeitsverlust deutlich vermindert werden, so dass die Gesamtmenge an Wirkstoff in der Mischung nur etwa halb so groß ist wie bei einer Anwendung der Einzelsubstanzen.

Wie vorstehend angegeben, hydrolysiert das Enzym Urease Harnstoff relativ rasch zu Ammoniak und Kohlendioxid. Durch Einsatz von Urease-Inhibitoren kann dieser Vorgang verzögert bzw. verlangsamt werden.

Nitrifikationsinhibitoren verhindern die vorzeitige Umwandlung von Stickstoff in Düngemitteln in Nitrat, das beispielsweise von Regenwasser einfach ausgewaschen werden kann und damit den Pflanzen verlorengeht.

Typische Nitrifikationsinhibitoren wie 3,4-Dimethylpyrazol erhöhen typischerweise die Ammoniakemissionen aus harnstoffhaltigen Düngemitteln signifikant, unter anderem, da der pH-Wert nach der Hydrolyse länger im basischen Bereich verbleibt. Bei den erhöhten pH-Werten ist ein deutlich höheres Ammoniakemissionspotential gegeben als bei niedrigeren pH-Werten. Die Bildung von N₂O und die Nitratauswaschung sinken zwar durch Einsatz eines Nitrifikationsinhibitors, diese erwünschte Wirkung wird jedoch mit erhöhten Ammoniakemissionen und damit Verlust von Stickstoff über Ammoniak erkauft.

Daher wird zwar häufig ein Urease-Inhibitor auf harnstoffhaltigen Düngemitteln eingesetzt, nicht jedoch ein Nitrifikationsinhibitor.

Die (Thio)phosphorsäuretriamide der allgemeinen Formel (I) bzw. (Thio)phosphorsäurediamide der allgemeinen Formel (II), insbesondere N-(n-Butyl)thiophosphorsäuretriamid (NBPT) oder N-(n-Propyl)thiophosphorsäuretriamid (NPPT), unterbinden oder begrenzen die Ammoniak-Emission aus Harnstoff und die zusätzlichen Ammoniakemissionen bei Mitverwendung von 2-(N-3,4-Dimethylpyrazol)bernsteinsäure als Nitrifikationsinhibitor. Damit wird nicht nur die Nitrifikation durch den eingesetzten Nitrifikationsinhibitor ausreichend gehemmt und Lachgasverluste werden stark reduziert, sondern auch die Ammoniakverluste werden stark vermindert, so dass der Harnstoff länger stabilisiert wird.

Dieser Effekt tritt speziell beim Einsatz des erfindungsgemäßen Nitrifikationsinhibitors DMPSA in Kombination mit den erfindungsgemäßen Urease-Inhibitoren auf. Die Nitrifikationsinhibierung und die Urease-Inhibierung bleiben dabei nebeneinander bestehen bei verminderter Einsatzmenge beider Wirkstoffe, siehe die in EP-A-3 109 223 beschriebenen Ergebnisse.

Im Ergebnis bleiben bei der gemeinsamen Anwendung des Nitrifikationsinhibitors DMPSA und des Urease-Inhibitors NBPT die Wirkungen der beiden Inhibitoren erhalten und verstärken sich gegenseitig so, dass die gesamte Einsatzmenge beider Wirkstoffe mehr als halbiert werden kann.

Gegenüber der üblichen Einsatzmenge der Einzelsubstanzen bei alleiniger Verwendung kann für DMPSA die Menge um bis zu 2/3 vermindert werden (z. B. von 0,36 Gew.-% auf 0,12 Gew.- %), bei NBPT um bis zu 1/3 (z. B. von 0,06 Gew.-% auf 0,04 Gew.-%), jeweils bezogen auf Harnstoff. Da üblicherweise DMPSA in wesentlich größerer Menge eingesetzt wird als NBPT, fällt die starke Verminderung seiner Menge umso stärker ins Gewicht.

Als Komponente A1 wird mindestens ein (Thio)phosphorsäuretriamid der allgemeinen Formel (I) und/oder ein (Thio)phosphorsäurediamid der allgemeinen Formel (II) eingesetzt. Dabei kann es sich um Einzelverbindungen wie auch um Mischungen von zwei oder mehr derartigen Verbindungen handeln. Beispielsweise kann es sich um Mischungen handeln, wie sie in der EP-A-1 820 788 beschrieben sind.

Die Reste R¹ und R² können jeweils unsubstituiert oder substituiert sein, z. B. durch Halogen und/oder Nitro.

Beispiele für Alkylgruppen sind Methyl, Ethyl, Propyl, Isopropyl, n-Butyl, Isobutyl, sec- Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl und Isodecyl. Cycloal-kylgruppen sind z. B. Cyclopropyl, Cyclobutyl, Cyclopentyl, Cyclohexyl und Cyclooctyl, Arylgruppen sind z. B. Phenyl oder Naphthyl bzw. substituiert 2-Nitrophenyl. Beispiele für heterocyclische Reste R₁R₂N- sind Piperazinyl-, Morpholinyl-, Pyrrolyl-, Pyrazolyl-, Triazolyl-, Oxazolyl-, Thiazolyl- oder Imidazolylgruppen.

Solche Verbindungen sind beispielsweise aus EP 0 119 487, WO 00/58317 und EP 1 183 220 als Urease-Inhibitoren bekannt.

Ein Beispiel für Verbindungen der Formel (II) ist Phenylphosphordiamidat.

Bevorzugt sind Zubereitungen, welche N-(n-Butyl)thiophosphorsäuretriamid (NBPT) als einen oder einzigen der Wirkstoffe (Komponente A1) enthalten. Wird ein weiterer Wirkstoff mitverwendet, so handelt es sich vorzugsweise um ein Derivat, ausgewählt aus der Gruppe bestehend aus N-Cyclohexyl-, N-Pentyl-, N-iso-Butyl und N-Propylphosphorsäuretriamid und entsprechenden Thiophosphorsäuretriamiden. Bevorzugt wird NPPT mitverwendet. Besonders bevorzugt sind solche Zubereitungen, welche NBPT oder eine Mischung aus NBPT und NPPT in Mengen von 40 bis 100 Gew.-%, ganz besonders bevorzugt von 60 bis 100 Gew.-% enthalten, jeweils bezogen auf die gesamte Wirkstoffmenge der Komponente A1. In einer Mischung aus NBPT und NPPT liegen die Verbindungen vorzugsweise im Gewichtsverhältnis von 19 : 1 bis 1 : 19, bevorzugt von 9 : 1 bis 1 : 9, besonders bevorzugt von 8 : 2 bis 2 : 8, speziell bevorzugt von 1 : 1 bis 5 : 1, insbesondere von 2 : 1 bis 4 : 1, beispielsweise von etwa 3 : 1 (75 % : 25 %), vor.

Besonders bevorzugt wird nur NBPT oder eine Mischung aus NBPT und NPPT, vorzugsweise im Gewichtsverhältnis von 2 : 1 bis 4 : 1, als Komponente A1 eingesetzt.

Thiophosphorsäuretriamide werden bekanntermaßen relativ leicht zu den entsprechenden Phosphorsäuretriamiden umgesetzt. Da Feuchtigkeit in der Regel nicht vollständig ausgeschlossen werden kann, liegen Thiophosphorsäuretriamid und das korrespondierende Phosphorsäuretriamid häufig im Gemisch miteinander vor. Der Begriff "(Thio)phosphorsäuretriamid" bezeichnet daher in dieser Schrift sowohl die reinen Thiophosphorsäuretriamide bzw. Phosphorsäuretriamide als auch deren Gemische.

Besonders bevorzugt sind N-Alkylthiophosphorsäuretriamide (mit X = S und R² = H) und N-Alkylphosphorsäuretriamide (mit X = O und R² = H).

Die Herstellung solcher Urease-Inhibitoren kann z. B. nach bekannten Methoden aus Thiophosphorylchlorid, primären oder sekundären Aminen und Ammoniak erfolgen, wie sie beispielsweise in US 5,770,771 beschrieben sind. Hierbei bringt man in einem ersten Schritt Thiophosphorylchlorid mit einem Äquivalent eines primären oder sekundären Amins in Gegenwart einer Base zur Reaktion und setzt das Produkt anschließend mit einem Überschuss Ammoniak zum Endprodukt um.

Weitere geeignete Urease-Inhibitoren, die gegebenenfalls zusätzlich mitverwendet werden können, sind beispielsweise in WO 00/61522, WO 00/58317, WO 02/083697, WO 01/87898, WO 2006/010389 beschrieben. Bei den dort beschriebenen Verbindungen handelt es sich beispielsweise um Thiophosphorsäuretriamide, heterocyclisch substituierte (Thio)phosphorsäuretriamide, N-(2-Pyrimidinyl)(thio)phosphorsäuretriamide und N-Phenylphosphorsäuretriamide.

In der EP-A-1 820 788 werden insbesondere Gemische aus N-(n-Butyl)thiophosphorsäuretriamid und N-(n-Propyl)thiophosphorsäuretriamid beschrieben.

Diese Gemische können erfindungsgemäß neben den Einzelsubstanzen besonders bevorzugt eingesetzt werden.

Die (Thio)phosphorsäuretriamide der allgemeinen Formel (I) bzw. (Thio)phosphorsäurediamide der allgemeinen Formel (II), die als Komponente A1 eingesetzt werden, können Reinstoffe sein oder Gemische von zweien oder mehreren Reinstoffen. Sie können auch synthesebedingt noch Nebenprodukte aus der Wirkstoffsynthese enthalten. In der Regel liegt die Komponente A1 in einer Reinheit von mindestens 70 % vor.

Die Komponente A1 wird in einem nicht mit Wasser mischbaren organischen Lösungsmittel (Komponente A2) gelöst. Der Begriff "nicht mit Wasser mischbar" beschreibt organische Lösungsmittel, deren Löslichkeit in Wasser maximal 1 g/l bei 20 °C beträgt. Vorzugsweise beträgt die Löslichkeit in Wasser maximal 100 mg/l bei 20 °C.

Geeignete Lösungsmittel sind ausgewählt aus nicht mit Wasser mischbare Alkoholen, Ethern, Estern, Kohlenwasserstoffen, Polyalkylenpolyolen, wie nicht mit Wasser mischbaren Polyalkylenglykolen oder Glykolderivaten, und deren Ethern, flüssigen Amiden oder Gemischen davon, vorzugsweise aus nicht mit Wasser mischbare Alkoholen, Ethern, Estern oder Gemischen davon.

Vorzugsweise ist Komponente A2 ausgewählt aus 2-Propyl-1-heptanol, Benzylalkohol, Dimethylphthalat oder Gemischen davon. 2-Proplyheptan-1-ol weist beispielsweise eine Wasserlöslichkeit von nur 58 mg/l bei 20 °C auf und wird damit als wasserunlöslich angesehen.

Phase A enthält vorzugsweise 15 bis 35 Gew.-%, besonders bevorzugt 20 bis 30 Gew.-%, insbesondere 22 bis 26,5 Gew.-% der Komponente A1, bezogen auf das Gesamtgewicht der Phase A.

Zusätzlich kann in der Phase A mindestens eine eine Aminogruppe oder eine substituierte Aminogruppe enthaltende Verbindung bzw. ein Amin mit einem Siedepunkt von mehr als 100 °C als Komponente A3 mitverwendet werden.

Vorzugsweise ist die Komponente A3 nicht mit Wasser mischbar, siehe die vorstehende Definition.

Vorzugsweise ist diese Verbindung ausgewählt aus Methyldiethanolamin, Tetrahydroxypropylethylendiamin, Trimethylaminoethylethanolamin, N,N,N',N'-Tetramethyl-1,6-hexandiamin, N,N',N"-Tris(dimethylaminopropyl)hexahydrotriazin, 2,2'-Dimorpholinyldiethylether, N,N,N',N',N",N"-Hexa-methyl-1,3,5-triazine-1,3,5(2H,4H,6H)-tripropanamin, N,N,N',N'-Tetrakis(2-Hydro-xypropyl)ethylendiamin oder Gemischen davon, wobei Komponenten A3 vorzugsweise in mindestens der 0,2-fachen molaren Menge der Komponente A1 eingesetzt wird. Das Amin dient u. a. zur Stabilisierung des Urease-Inhibitors in der organischen Lösung.

Der auf Harnstoff aufgebrachte Wirkstoff der Komponente A1 weist oft eine deutlich höhere Lagerstabilität auf (mindestens zwei bis drei Monate), wenn er in Kombination mit mindestens einem Amin mit einem Siedepunkt von mehr als 100°C als Komponente A3 eingesetzt wird. Die Komponente A3 enthält mindestens eine Aminogruppe, z. B. primäre, sekundäre oder tertiäre Aminogruppe, wobei beliebige weitere funktionelle Gruppen und Reste, wie z. B. Hydroxy-, Halogen-, Carboxy-, Carbamoyl-, Carbonyl-, Oxyalkyl-, Mercapto-, M-sulfido-, Sulfoxy-, Sulfo-, Phospho-, Siloxy-, Amino-, Amido-, Imino-, Imido-, Oxyamidogruppen etc. in der Verbindung vorliegen können. Nachstehend wird Komponente A3 beispielhaft als Amin näher erläutert.

Das Amin der Komponente A3 weist vorzugsweise einen Siedepunkt von mehr als 150 °C, besonders bevorzugt von mehr als 200 °C bei Umgebungsdruck (1 bar) auf. Es kann sich dabei um primäre, sekundäre oder tertiäre Amine oder Polyamine handeln, die mehrere dieser Aminogruppen tragen. Bevorzugt werden als Amine sekundäre und/oder tertiäre Amine eingesetzt. Besonders bevorzugt werden tertiäre Amine eingesetzt, die auch in polymerer Form vorliegen können. Bevorzugt werden solche Amine eingesetzt, die keine chemische Reaktion mit dem Wirkstoff der Komponente A1 oder dem mitverwendeten Lösungsmittel der Komponente A2 eingehen. Beispielsweise sind die Amine der Komponente A3 ausgewählt aus Methyldiethanolamin, Tetrahydroxypropylethylendiamin, Trimethylaminoethylethanolamin, N,N,N',N'-Tetramethyl-1,6-hexandiamin, N,N',N"-Tris(dimethylaminopropyl)hexahydrotriazin, 2,2'-Dimorpholinyldiethylether oder Gemischen davon.

Für weitere geeignete Amine kann auf WO 2016/103168 verwiesen werden, insbesondere die dort offenbarten Amine der Gruppen L10 bis L24 und L29. Weitere geeignete Amine sind in WO 2015/001457 beschrieben, siehe dort insbesondere die Komponente (C) und speziell die als Komponenten (C1) bis (C5) beschriebenen Amine. Weitere geeignete Amine sind in WO 2018/007426 beschrieben, dort insbesondere als Komponente B, ausgewählt aus B1 bis B4 unter den allgemeinen Formeln (III) bis (X). Ferner kann auf Aminoalkohole verwiesen werden, wie sie beispielsweise in WO 2013/090324 beschrieben sind.

Unter Aminen werden Ammoniak-Abkömmlinge verstanden, bei denen die H-Atome gegen organische Molekülreste ausgetauscht sind. Bei Austausch aller drei Wasserstoffatome spricht man von tertiären Aminen, bei Austausch von zwei Wasserstoffatomen von sekundären Aminen und bei Austausch eines Wasserstoffatoms von primären Aminen.

Verbindungen, die wie beim Pyridin eine C=N-Bindung aufweisen, gehören nicht in die erfindungsgemäße Amin-Systematik.

Die gesättigten zyklischen Amine wie Piperidin, Pyrrolidin werden ebenso wie deren (ungesättigte) aromatische Vertreter Pyridin, Pyrrol als heterocyclische Verbindungen behandelt und damit nicht als Amine.

Ebenso ist die Cyanogruppe -CN keine tertiäre Aminogruppe und Blausäure (H-CN) kein tertiäres Amin.

Der generische Ausdruck "Amine" wird damit verwendet für Verbindungen NH₂R, NHR¹R² und NHR¹R²R³, die primäre, sekundäre bzw. tertiäre Amine genannt werden. In einem weiteren Sinn können auch Verbindungen, die Stickstoff als Teil eines Rings enthalten und deren Basizität auf dieses Atom zurückgeführt werden kann, als "Amine" bezeichnet werden. So ist beispielsweise Piperidin nach seiner chemischen Struktur ein ringförmiges sekundäres Amin.

Amide wie beispielsweise N-Methylpyrrolidon (NMP) weisen keine stabilisierende Wirkung auf und kommen damit auch nicht als erfindungsgemäß verwendbare Amine in Betracht.

Dicyandiamid (DCD) ist ebenfalls kein Amin, sondern bereits nach der chemischen Bezeichnung ein Amid. Es handelt sich um ein Cyanamid- und Guanidin-Derivat mit nicht nennenswerter Basizität.

Erfindungsgemäß fallen unter den Begriff "Amine" damit weder Pyridine noch Guanidine, Harnstoff, Thioharnstoff oder Dicyandiamid. Auch (Thio)phosphorsäuretriamide zählen als Amide erfindungsgemäß nicht zu den Aminen.

Die Komponente A3 wird in einer zur Erhöhung der Lagerstabilität des Wirkstoffs der Komponente A1 ausreichenden Menge auf harnstoffhaltigen Düngemitteln eingesetzt. Bevorzugt sollte Komponente A3 in mindestens der 0,2-fachen molaren Menge der Komponente A1 eingesetzt werden, besonders bevorzugt in der 0,5- bis 3-fachen molaren Menge, insbesondere in der 1- bis 2-fachen molaren Menge.

Durch Zusatz von polymeren Hilfsstoffen kann darüber hinaus die stabilisierende Wirkung noch weiter verstärkt werden.

Erfindungsgemäß können als weitere Komponente C Polymere in gelöster oder dispergierter Form in der Phase A enthalten sein. Dabei sind solche Polymere bevorzugt, die mit den Komponenten A1 und B1 keine chemischen Reaktionen eingehen. Die Polymere können in Lösung, Emulsion oder dispergierter Form vorliegen. Bevorzugt werden lösliche Polymere eingesetzt, die bevorzugt ein Zahlenmittel des Molekulargewichts von mindestens 5000 aufweisen. Geeignete Polymere können sich von vinylischen Monomeren herleiten, beispielsweise von Styrolen oder (Meth)acrylaten oder Acrylnitril. Beispielsweise können lösliche Polystyrole, lösliche Polystyrol-Acrylnitril-Polymere oder auch derartige, Pfropfkautschuke enthaltende Polymere, eingesetzt werden. Ferner können beispielsweise Polyester oder Polyalkylenglykole eingesetzt werden. Die Stabilisierung der Urease-Inhibitoren der Komponente A1 wird durch den Zusatz der Polymere nochmals verbessert. Sie können auch zur verzögerten Freisetzung der Mischung in Art einer "controlled release" eingesetzt werden. Die Bestandteile sind in der Mischung bevorzugt in folgenden Mengen enthalten.

Der Anteil des Amins der Komponente A3 in der erfindungsgemäßen Phase A beträgt, sofern enthalten, vorzugsweise 1 bis 50 Gew.-%, besonders bevorzugt 2 bis 40 Gew.-%, insbesondere 3 bis 35 Gew.-%. Die Menge der optionalen Polymerkomponente C beträgt vorzugsweise 0 bis 50 Gew.-%, insbesondere 0 bis 25 Gew.-%. Bei Vorliegen der Komponente C beträgt die Menge vorzugsweise 1 bis 50 Gew.-%, insbesondere 2 bis 25 Gew.-%. Die Gesamtmenge der Komponenten der Phase A ergibt dabei 100 Gew.-%.

Als Komponente B1 enthält die erfindungsgemäße Emulsion 2-(N-3,4-Dimethylpyrazol)bernsteinsäure (DMPBS oder DMPSA) als Pyrazolverbindung mit nitrifikationsinhibierender Wirkung. Diese Verbindung ist aus dem Stand der Technik bekannt und beispielsweise in WO 96/24566, WO 2011/032904 und WO 2013/121384 beschrieben.

2-(N-3,4-Dimethylpyrazol)bernsteinsäure ist häufig ein Isomerengemisch von 2-(3,4-Dimethyl-1H-pyrazol-1-yl)bernsteinsäure und 2-(2,3-Dimethyl-1H-pyrazol-1-yl)bernsteinsäure, im Verhältnis von vorzugsweise etwa 80 : 20. Auch eine der Einzelverbindungen kann eingesetzt werden. Erfindungsgemäß werden vorzugsweise Salze dieser Verbindung(en) eingesetzt, beispielsweise (Di-)Alkalisalze, Erdalkalisalze oder (Di-)Ammoniumsalze, bevorzugt Alkalisalze, speziell Kaliumsalze.

Unter der Bezeichnung "DMPSA" oder "DMPBS" werden erfindungsgemäß auch die vorgenannten Salze verstanden. Vorzugsweise weist Phase B einen pH-Wert im Bereich von 6 bis 9, besonders bevorzugt von 7 bis 8, auf. Die Einstellung dieses pH-Wertes kann durch die Einsatzmenge an Alkalihydroxid, Erdalkalihydroxid oder Ammoniak zur Neutralisation von DMPSA erfolgen.

Die Phase B sollte vorzugsweise einen möglichst neutralen pH-Wert aufweisen, um eine schnelle Hydrolyse der Komponente A1 bei Kontakt der beiden Lösungen zu vermeiden. Es ist bekannt, dass insbesondere NBPT in wässrigen Lösungen und Emulsionen bei niedrigeren pH-Werten schnell zersetzt wird und auch bei höheren pH-Werten instabil ist.

Komponente B1 liegt gelöst in Wasser vor. Dabei kann das Wasser zusätzlich geringe Mengen wasserlöslicher zusätzlicher Lösungsmittel enthalten, beispielsweise niedere Alkanole, N-Methylpyrrolidon (NMP) oder gegebenenfalls auch Dimethylsulfoxid (DMSO). Deren Menge kann beispielsweise bis zu 10 Gew.-%, vorzugsweise bis zu 5 Gew.-%, betragen, bezogen auf Wasser und zusätzliches Lösungsmittel. Vorzugsweise wird Wasser als alleiniges Lösungsmittel für die Phase B eingesetzt. Der Begriff "wässrige Phase" beschreibt eine Phase mit einem überwiegenden Wasseranteil als Lösungsmittel. Sie enthält Komponente B1 gelöst in Wasser.

Vorzugsweise enthält Phase B 20 bis 60 Gew.-%, besonders bevorzugt 25 bis 50 Gew.-%, insbesondere 30 bis 40 Gew.-% der Komponente B1, bezogen auf das Gesamtgewicht der Phase B. Die Werte beziehen sich dabei auf die freie Säure (DMPSA) oder auf ihre Salzform, vorzugsweise auf die Salzform. Bei Einsatz der freien Säure (DMPSA) kann die Obergrenze auf 45 Gew.-%, vorzugsweise 40 Gew.-%, insbesondere 35 Gew.-%, vermindert werden.

Besonders bevorzugt enthält Phase B nur DMPSA und KOH im Molverhältnis 2 : 1, gelöst in Wasser.

Die Herstellung von 2-(N-3,4-Dimethylpyrazol)bernsteinsäure kann durch beliebige geeignete Verfahren erfolgen, die beispielsweise in allgemeiner Form in WO 96/24566 beschrieben sind. Vorzugsweise erfolgt die Herstellung durch Umsetzung von 3,4-Dimethylpyrazol mit Maleinsäure oder Maleinsäureanhydrid. Diese Umsetzung wird typischerweise in saurer Umgebung durchgeführt. Zur Herstellung von 3,4-Dimethylpyrazol kann auf Noyce et al., Jour. of Org. Chem. 20, 1955, Seiten 1681 bis 1682, verwiesen werden. Ferner kann auf EP-A-0 474 037, DE-A-3 840 342 und EP-A-0 467 707 verwiesen werden, wie auch auf EP-B-1 120 388 und EP-A-3 109 223.

Für die Reinigung des 3,4-Dimethylpyrazols kann auf DE-A-10 2009 060 150 verwiesen werden.

Eine bevorzugte Herstellung ist in EP-A-3 109 223 genannt.

Durch Verwendung des Umsetzungsprodukts von 3,4-Dimethylpyrazol mit Maleinsäure kann die Flüchtigkeit des 3,4-Dimethylpyrazols stark herabgesetzt werden.

Vorzugsweise ist die Emulsion und damit sowohl Phase A als auch Phase B frei von Fungiziden, wie sie beispielsweise in WO 2015/104699A2 beschrieben sind. Vorzugsweise ist Komponente A1 kein 1,3,4-Oxa und 1,3,4-Thiadiazol-2-yl(thio)phosphorsäuretriamid der allgemeinen Formel (I) 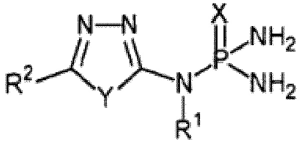 wobei in Formel (I) bedeuten:
X, Y = unabhängig voneinander Sauerstoff oder Schwefel
R¹, R² = unabhängig voneinander Wasserstoff, C₁-C₈-Alkyl/Heteroalkyl, C₂-C₈-Alkenyl/Heteroalkenyl, C₂-C₈-AlkinylHeteroalkinyl, C₃-C₈-Cycloalkyl/Heterocycloalkyl, C₃-C₈-Cycloalkenyl/Heterocycloalkenyl, C₆-C₁₀-Aryl/Heteroaryl, Aralkyl, Heteroarylalkyl, Alkaryl, Alkheteroaryl, Alkoxy, Aryloxy, Hetaryloxy, Alkylthio, Arylthio, Hetarylthio, Acyl, Aroyl, Hetaroyl, Acyloxy, Aroyloxy, Hetaroyloxy, Alkoxycarbonyl, Aryloxycarbonyl, Hetaryloxycarbonyl, Amino, Alkylamino, Dialkylamino, Alkylsulfonyl, Arylsulfonyl, Fluor, Chlor, Brom, Iod, Hydroxy, Cyano, Nitro, Sulfo, Carbonyl, Carboxy, Carbamoyl, Sulfamoyl, wobei die Reste R¹ und/oder R² gegebenenfalls selber und unabhängig voneinander mit einer oder mehrerer der oben genannten Gruppen substituiert sein können.

Die Phasen A und B werden in jeweils solchen Mengen miteinander zu einer Emulsion vermischt, dass Komponenten A1 und B1 in einem Gewichtsverhältnis von 1 : 1 bis 1 : 6, vorzugsweise 1 : 1,5 bis 1 : 5, insbesondere 1 : 2 bis 1 : 4,5, speziell 1 : 2,5 bis 1 : 4, vorliegen.

Die erfindungsgemäßen Emulsionen können gemäß einer Ausführungsform der Erfindung frei von Emulgier- oder Dispergiermitteln, wie Tensiden, die üblicherweise zur Stabilisierung von Öl/Wasser-Emulsionen eingesetzt werden. Sofern, wie bevorzugt, die Emulsion durch Vermischen der Phasen A und B unmittelbar vor der Beschichtung des festen teilchenförmigen harnstoffhaltigen Düngemittels hergestellt wird, und die Aufbringung auf das Düngemittel unmittelbar nachfolgend stattfindet, sind die Emulsionen für diesen kurzen erforderlichen Zeitraum hinreichend stabil, so dass auf die Mitverwendung eines Emulgier- oder Dispergierhilfsmittels verzichtet werden kann. Dann sind die Emulsionen frei von Emulgier- oder Dispergierhilfsmitteln.

Gemäß einer alternativen Ausführungsform der Erfindung enthalten die Emulsionen Emulgier(hilfs)mittel oder Dispergier(hilfs)mittel. Ihre Menge beträgt bei einer Mitverwendung üblicherweise 0,01 bis 5 Gew.-%, vorzugsweise 0,02 bis 2 Gew.-%, insbesondere 0,1 bis 1 Gew.-%, bezogen auf die Summe der Phase A und B, die 100 Gew.-% ergibt. Geeignete Emulgier- und Dispergier(hilfs)mittel sind dem Fachmann bekannt. Es kann sich insbesondere um anionische, kationische, nichtionische oder amphotere Tenside handeln. Beispielsweise können nichtionische Tenside wie Alkylarylpolyetheralkohole eingesetzt werden, wie sie beispielsweise in WO 97/22568 beschrieben sind. Besonders bevorzugt wird erfindungsgemäß ohne Emulgier- und Dispergier(hilfs)mittel gearbeitet.

Bevorzugt werden möglichst konzentrierte Lösungen in Phase A und Phase B eingesetzt, so dass der Anteil an Lösungsmittel vermindert werden kann. Die Gesamtmenge der Emulsion sollte jedoch so bemessen sein, dass eine möglichst gleichmäßige Beschichtung von harnstoffhaltigen Düngemitteln möglich ist, wobei die genannten bevorzugten Gehalte der Komponenten A1 und B1 auf das Düngemittel aufgebracht werden.

Bei einer Standardkonzentration von 35 Gew.-% Komponente B1 in Phase B und 23 Gew.-% von Komponente A1 in Phase A werden Phase A und B vorzugsweise in einem Gewichtsverhältnis von 1 : 2 bis 1 : 2,5 eingesetzt, speziell etwa 1 : 2,3. Bei anderen Substanzgehalten der Phasen A und B muss das Verhältnis entsprechend angepasst werden.

Die typische Aufbringmenge der Emulsion auf ein harnstoffhaltiges Düngemittel richtet sich nach dem Amid-N-Gehalt des Düngemittels und den Mengen bzw. Konzentrationen der aktiven Wirkstoffe.

Düngemittelmischungen enthalten bevorzugt 100 bis 3000 Gew.-ppm, bezogen auf den Harnstoff im Düngemittel, an Nitrifikationsinhibitor (0,01 bis 0,3 Gew.-%), besonders bevorzugt 0,03 bis 0,2 Gew.-% DMPSA, insbesondere 0,04 bis 0,18 Gew.-% DMPSA. Vorzugsweise beziehen sich die Mengen auf die freie Säure (DMPSA) und sind bei Verwendung ihrer Salze entsprechen zu erhöhen, z. B. um den Faktor 1,4.

Die harnstoffhaltigen Düngemittelmischungen enthalten bevorzugt 100 bis 800 Gew.-% - ppm, bezogen auf das Düngemittel, an Komponente A1 (0,01 bis 0,08 Gew.-%), besonders bevorzugt 0,01 bis 0,07 Gew.-%, insbesondere 0,018 bis 0,06 Gew.-% der Komponente A1, insbesondere NBPT.

Komponenten A1 und B1 liegen im Düngemittel vorzugsweise in einem Gewichtsverhältnis im Bereich von 1 : 1 bis 1 : 6, besonders bevorzugt 1 : 1,5 bis 1 : 5, insbesondere 1 : 2 bis 1 : 4,5, speziell 1 : 2,5 bis 1 : 4 vor.

Die Erfindung betrifft auch ein harnstoffhaltiges Düngemittel, enthaltend eine Emulsion, wie sie vorstehend beschrieben ist, in einer solchen Menge, dass der Gesamtgehalt der Komponenten A1 und B1, bezogen auf den enthaltenen Harnstoff, 0,02 bis 0,38 Gew.-% beträgt. Der Gehalt der Komponenten A1 und B1, bezogen auf den enthaltenen Harnstoff, beträgt besonders bevorzugt 0,04 bis 0,27 Gew.-%, insbesondere 0,058 bis 0,24 Gew.-%. Dabei ist im harnstoffhaltigen Düngemittel die Emulsion bevorzugt auf die Oberfläche des harnstoffhaltigen Düngemittels aufgebracht.

Die Herstellung der erfindungsgemäßen harnstoffhaltigen Düngemittel erfolgt durch ein Verfahren, das die folgenden Schritte umfasst:
a) getrenntes Herstellen der Phasen A und B, wie sie vorstehend definiert sind,
b) Vermischen der Phasen A und B aus Schritt a) zur Herstellung einer Emulsion der Phasen A und B,
c) Aufbringen der Emulsion aus Schritt b) auf ein teilchenförmiges harnstoffhaltiges Düngemittel oder Einbringen der Emulsion aus Schritt b) in ein teilchenförmiges harnstoffhaltiges Düngemittel.

Das Vermischen der Phasen A und B in Schritt b) kann bei Raumtemperatur oder auch bei erhöhter Temperatur von beispielsweise 30 bis 60 °C erfolgen. Besonders bevorzugt wird das Vermischen bei einer Temperatur im Bereich von 20 bis 40 °C durchgeführt.

Das Vermischen der Phasen A und B kann durch einen statischen oder bewegten Mischer erfolgen, beispielsweise ein Rührwerk. Vorzugsweise erfolgt das Vermischen der Phasen A und B zur Herstellung einer Emulsion unmittelbar vor dem Aufbringen der Emulsion auf das teilchenförmige harnstoffhaltige Düngemittel, da so einer Zersetzung der Inhaltsstoffe wirksam vorgebeugt werden kann. Vorzugsweise liegt zwischen Schritt c) und b) ein Zeitraum von maximal 60, besonders bevorzugt maximal 30 Sekunden, insbesondere sollte der Zeitraum so kurz wie möglich gehalten werden (kleiner 15 Sekunden).

Schritt c) ist vorzugsweise ein Aufsprühen und/oder Auftrommeln der Emulsion auf das harnstoffhaltige Düngemittel. Dabei wird das harnstoffhaltige Düngemittel vorzugsweise bewegt.

Dies kann auch unter Einsatz weiterer Hilfsstoffe, wie Haftungsvermittlern oder Umhüllungsmaterialien, erfolgen. Geeignete Apparate zur Durchführung dieser Aufbringung sind beispielsweise Teller, Trommeln, Mischer oder Wirbelbettapparate, die Aufbringung kann aber auch auf Förderbändern bzw. deren Abwurfstellen oder mittels pneumatischer Feststoffförderer erfolgen. Eine abschließende Behandlung mit Antibackmitteln und/oder Antistaubmitteln ist ebenfalls möglich. Die erfindungsgemäßen Düngemittel oder Emulsionen werden bei der Düngung mit harnstoffhaltigen Düngemitteln verwendet. Bevorzugt erfolgt die Applikation auf einer landwirtschaftlich oder gärtnerisch genutzten Bodenfläche, wie Ackerboden.

Das harnstoffhaltige Düngemittel liegt teilchenförmig vor. Dabei kann es sich um Pulver, Prill, Kompaktate oder andere regelmäßig oder unregelmäßig geformte Teilchen handeln.

Im harnstoffhaltigen Düngemittel beträgt der Harnstoffanteil vorzugsweise 20 bis 100 Gew.-%, besonders bevorzugt 50 bis 100 Gew.-% oder 100 Gew.-%. Weitere mögliche Inhaltsstoffe sind die üblichen Inhaltsstoffe von NPK-Düngemitteln.

Unter einem harnstoffhaltigen Düngemittel ist zunächst einmal Harnstoff selbst zu verstehen. Dieser hat in marktüblicher Düngemittelqualität eine Reinheit von mindestens 90 % und kann beispielsweise kristallin, granuliert, kompaktiert, geprillt oder gemahlen vorliegen. Daneben sollen auch Mischungen von Harnstoff mit einem oder mehreren weiteren Stickstoffdüngemitteln, wie Ammoniumsulfat, Ammoniumnitrat, Ammoniumchlorid, Cyanamid, Dicyandiamid (DCD) oder Calciumnitrat, sowie Langzeitdüngemitteln, beispielsweise Harnstoff-Formaldehyd-, Harnstoff-Acetaldehyd oder Harnstoff-Glyoxal-Kondensate, umfasst sein. Weiterhin sind auch harnstoffhaltige Mehrnährstoffdünger umfasst, welche neben Stickstoff noch mindestens einen weiteren Nährstoff, wie Phosphor, Kalium, Magnesium, Calcium oder Schwefel, enthalten. Daneben können auch die Spurenelemente Bor, Eisen, Kupfer, Zink, Mangan oder Molybdän enthalten sein. Derartige harnstoffhaltige Mehrnährstoffdünger können ebenfalls granuliert, kompaktiert, geprillt, gemahlen oder als Kristallmischung vorliegen. Die harnstoffhaltigen Düngemittel können außerdem noch einen oder mehrere weitere Wirkstoffe, wie beispielsweise Nitrifikationsinhibitoren, Herbizide, Fungizide, Insektizide, Wachstumsregulatoren, Hormone, Pheromone oder andere Pflanzenschutzmittel oder Bodenhilfsstoffe, in Mengen von 0,01 bis 20 Gew.-% enthalten.

Die Erfindung betrifft auch ein nach dem vorstehenden Verfahren erhältliches harnstoffhaltiges Düngemittel.

Die erfindungsgemäßen Emulsionen können als Additiv oder Beschichtungsmittel für harnstoffhaltige Stickstoffdüngemittel eingesetzt werden.

Als Additiv können sie dabei vor, nach oder gemeinsam mit einem harnstoffhaltigen Stickstoffdüngemittel auf Erdboden oder Pflanzsubstrat ausgebracht werden. Dabei kann die erfindungsgemäße Emulsion separat vom harnstoffhaltigen Stickstoffdüngemittel dosiert werden. Häufiger wird die erfindungsgemäße Emulsion als Beschichtungsmittel auf das harnstoffhaltige Stickstoffdüngemittel aufgebracht. Bei der Mitverwendung als Additiv für harnstoffhaltige Stickstoffdüngemittel werden die erfindungsgemäßen Emulsionen vorzugsweise in einer Menge von 0,001 bis 0,5 Gew.-%, bezogen auf das Gewicht des Harnstoffs im Stickstoffdüngemittel und auf Komponenten A1 und B1, in den Emulsionen eingesetzt.

Die Erfindung wird durch die nachfolgenden Beispiele näher erläutert.

### Beispiele

In den nachfolgenden Beispielen bedeuten
NBPT: N-(n-Butyl)-thiophosphorsäuretriamid = Urease-Inhibitor UI
DMPSA oder DMPBS: 2-(N-3,4-Dimethylpyrazol)bernsteinsäure = Nitrifikationsinhibitor NI

### A. Herstellungsbeispiele für 2-(N-3,4-Dimethylpyrazol)bernsteinsäure (DMPSA)

Die Herstellung erfolgt wie in EP-A-3 109 223 in den Beispielen 1 oder 2 beschrieben.

### B. Herstellung der Phase A und B

79 g einer DMPSA-Formulierung wurden als 35 gew.-%ige wässrige, pH-neutrale Formulierung von DMPSA als Dikaliumsalz hergestellt.

35 g einer NBPT-Formulierung wurden als 23 gew.-%ige wasserfreie Lösung von NBPT in 2-Propyl-1-Heptanol hergestellt, unter Zusatz von 46 Gew.-% eines Gemisches aus N,N,N',N',N",N"-Hexa-methyl-1,3,5-triazine-1,3,5(2H,4H,6H)-tripropanamin und N,N,N',N'-Tetrakis(2-Hydro-xypropyl)ethylendiamin.

### C. Aufbringen der Phasen A und B auf das Düngemittel

20 kg granulierter Harnstoff wurden in einem Mischer vorgelegt. 35 g der NBPT-Formulierung und 79 g DMPSA-Formulierung wurden in eine Sprühflasche gegeben und so lange geschüttelt, bis eine gleichförmige Emulsion entstanden war. Die Formulierungsemulsion wurde sogleich auf den Harnstoff aufgesprüht, wobei die Sprühflasche zwischendurch geschüttelt wurde, um ein Absetzen der Emulsion zu verhindern. Der Mischer wurde für weitere 10 Minuten weiterbetrieben, bis ein homogenes Produkt erhalten wurde.

In einem Vergleichsversuch wurden identische Mengen an DMPSA und NBPT auf Harnstoff aufgebracht. Dabei wurde zunächst DMPSA-Formulierung auf den Harnstoff nach dem vorstehenden Verfahren aufgebracht, und nach dem Trocknen wurde die NBPT-Formulierung aufgebracht.

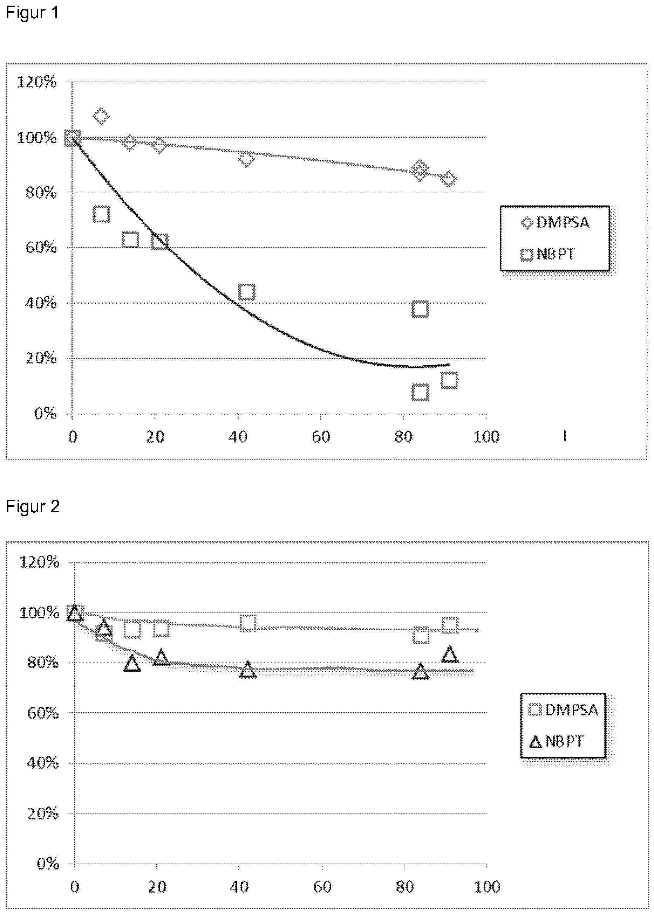

Für beide behandelte Harnstoffdüngemittel wurden Lagerstabilitätstests durchgeführt. Die Lagerung erfolgte dabei über 90 Tage unter Standardbedingungen im Klimaschrank. In zeitlichen Abständen wurde der Gehalt an NBPT und DMPSA bestimmt. Figur 1 zeigt die zeitliche Abnahme des Gehalts an NBPT und DMPSA nach der angegebenen Anzahl an Tagen für die Vergleichsformulierung.

Figur 2 zeigt die Ergebnisse des Stabilitätstest für die erfindungsgemäßen harnstoffhaltigen Düngemittel, bei denen DMPSA und NBPT als Emulsionsgemisch aufgebracht wurden.

Aus den Figuren ist klar erkennbar, dass sowohl die Abnahme an DMPSA als auch an NBPT für die erfindungsgemäß hergestellten harnstoffhaltigen Düngemittel wesentlich geringer waren als im Vergleichsversuch.

### D. Lösungsversuche

Ferner wurden Lösungsversuche für DMPSA und NBPT durchgeführt:
In wässrigen Medien war die Löslichkeit von NBPT viel zu gering, um eine genügend hohe Konzentration zu erhalten. Die Aufwandmenge der Lösung für die Applikation auf Düngemittel wäre zu hoch.

In gängigen organischen Lösungsmitteln waren beide aktiven Substanzen zwar in ausreichender Menge löslich, jedoch kam es schon nach kurzer Zeit zu chemischen Reaktionen zwischen NBPT und Lösungsmittelbestandteilen oder zwischen beiden aktiven Substanzen mit der Folge der Zersetzung.

Hieraus lässt sich ableiten, dass es keine Möglichkeit gibt, beide aktive Substanzen in geeigneten Konzentrationen gemeinsam stabil in demselben Lösungsmittelsystem zu halten.

### E. Vergleichsversuche

Im Vergleichsversuch wurde in der Phase B anstelle einer DMPBS-Formulierung 79 g einer DMPP-Formulierung als 35 gew.-%ige wässrige, pH-neutrale Formulierung eingesetzt. Ansonsten wurde wie in den Beispielen B. und C. beschrieben vorgegangen.

Für beide behandelte Harnstoffdüngemittel wurde sowohl für NBPT als auch für DMPP ein schnelles Abbauverhalten beobachtet. Nach einer Zeit von 7 Tagen waren ca. 50 % des DMPP und 100 % des NBPT abgebaut. Aus HPLC-Chromatogrammen für beide behandelte Harnstoffdüngemittel lässt sich auf chemische Reaktionen beider Substanzen miteinander schließen, die zu einem Abbau von DMPP und NBPT führen.

## Patentansprüche

1. Emulsion zur Behandlung von harnstoffhaltigen Düngemitteln, enthaltend eine wässrige Phase B und eine mit Phase B emulgierte nicht-wässrige Phase A,
wobei Phase A mindestens ein (Thio)phosphorsäuretriamid der allgemeinen Formel (I) und/oder (Thio)phosphorsäurediamid der allgemeinen Formel (II)
R¹R²N-P(X)(NH₂)₂ (I)
R¹O-P(X)(NH₂)₂ (II)
mit der Bedeutung
X Sauerstoff oder Schwefel,
R¹ und R² unabhängig voneinander Wasserstoff, jeweils substituiertes oder unsubstituiertes 2-Nitrophenyl, C₁₋₁₀-Alkyl, C₃₋₁₀-Cycloalkyl, C₃₋₁₀-Heterocycloalkyl, C₆₋₁₀-Aryl, C₆₋₁₀-Heteroaryl oder Diaminocarbonyl, wobei R¹ und R² zusammen mit dem sie verbindenden Stickstoffatom auch einen 5- oder 6-gliedrigen gesättigten oder ungesättigten heterocyclischen Rest bilden können, der gegebenenfalls auch ein oder zwei weitere Heteroatome, ausgewählt aus der Gruppe, bestehend aus Stickstoff, Sauerstoff und Schwefel, enthalten kann,
als Komponente A1, gelöst in einem nicht mit Wasser mischbaren organischen Lösungsmittel als Komponente A2, enthält,
und
wobei Phase B 2-(N-3,4-Dimethylpyrazol)bernsteinsäure, die vorzugsweise als Dialkalisalz, Erdalkalisalz, Diammoniumsalz oder Gemisch davon vorliegt, als Komponente B1, gelöst in Wasser, enthält.

2. Emulsion nach Anspruch 1, **dadurch gekennzeichnet, dass** als (Thio)phosphorsäuretriamide der allgemeinen Formel (I) N-Alkylthiophosphorsäuretriamide mit den Bedeutungen X = S und R² = H und/oder N-Alkylphosphorsäuretriamide mit den Bedeutungen X = O und R² = H eingesetzt werden.

3. Emulsion nach einem der Ansprüche 1 oder 2, **dadurch gekennzeichnet, dass** Phase A mindestens eine eine Aminogruppe oder eine substituierte Aminogruppe enthaltende Verbindung mit einem Siedepunkt von mehr als 100 °C, vorzugsweise ein Amin, besonders bevorzugt ausgewählt aus Methyldiethanolamin, Tetrahydroxypropylethylendiamin, Trimethylaminoethylethanolamin, N,N,N',N'-Tetramethyl-1,6-hexandiamin, N,N',N"-Tris(dimethylaminopropyl)hexahydrotriazin, 2,2'-Dimorpholinyldiethylether, N,N,N',N',N",N"-Hexa-methyl-1,3,5-triazine-1,3,5(2H,4H,6H)-tripropanamin, N,N,N',N'-Tetrakis(2-Hydro-xypropyl)ethylendiamin oder Gemischen davon, als Komponente A3 in vorzugsweise mindestens der 0,2-fachen molaren Menge der Komponente A1 enthält.

4. Emulsion nach einem der Ansprüche 1 bis 3, **dadurch gekennzeichnet, dass** Phase A weiterhin ein Polymer in gelöster oder dispergierter Form als Komponente C enthält.

5. Emulsion nach einem der Ansprüche 1 bis 4, **dadurch gekennzeichnet, dass** Komponenten A1 und B1 in einem Gewichtsverhältnis im Bereich von 1 : 1 bis 1 : 6, vorzugsweise 1 : 1,5 bis 1 : 5, insbesondere 1 : 2 bis 1 : 4,5, vorliegen.

6. Emulsion nach einem der Ansprüche 1 bis 5, **dadurch gekennzeichnet, dass** als Komponente A1 N-(n-Butyl)-thiophosphorsäuretriamid oder eine Mischung aus N-(n-Butyl)-thiophosphorsäuretriamid und N-(n-Propyl)-thiophosphorsäuretriamid eingesetzt wird.

7. Emulsion nach einem der Ansprüche 1 bis 6, **dadurch gekennzeichnet, dass** Komponente A2 ausgewählt ist aus nicht mit Wasser mischbaren Alkoholen, Ethern, Estern, Kohlenwasserstoffen, Polyaklylenpolyolen und deren Ethern, flüssigen Amiden oder Gemischen davon, und vorzugsweise ausgewählt ist aus 2-Propyl-1-heptanol, Dimethylphthalat, Benzylalkohol oder Gemischen davon.

8. Emulsion nach einem der Ansprüche 1 bis 7, **dadurch gekennzeichnet, dass** Phase B einen pH-Wert im Bereich von 6 bis 9, vorzugsweise von 7 bis 8, aufweist.

9. Emulsion nach einem der Ansprüche 1 bis 8, **dadurch gekennzeichnet, dass** Phase A 15 bis 35 Gew.-%, vorzugsweise 20 bis 30 Gew.-%, insbesondere 22 bis 26,5 Gew.-% der Komponente A1 enthält, bezogen auf das Gesamtgewicht der Phase A.

10. Emulsion nach einem der Ansprüche 1 bis 9, **dadurch gekennzeichnet, dass** Phase B 20 bis 60 Gew.-%, vorzugsweise 25 bis 50 Gew.-%, insbesondere 30 bis 40 Gew.-% der Komponente B1 enthält, bezogen auf das Gesamtgewicht der Phase B.

11. Verwendung einer Emulsion gemäß einem der Ansprüche 1 bis 10 als Additiv oder Beschichtungsmittel für harnstoffhaltige Stickstoffdüngemittel.

12. Verwendung nach Anspruch 11, **dadurch gekennzeichnet, dass** die Emulsion getrennt oder gleichzeitig mit dem Düngemittel auf Erdboden oder Pflanzsubstrat ausgebracht wird oder in das Düngemittel eingebracht oder auf das Düngemittel aufgebracht wird.

13. Verfahren zur Herstellung von behandelten harnstoffhaltigen Düngemitteln, umfassend die Schritte
a) getrenntes Herstellen der Phasen A und B, wie sie in einem der Ansprüche 1 bis 10 definiert sind,
b) Vermischen der Phasen A und B aus Schritt a) zur Herstellung einer Emulsion der Phasen A und B,
c) Aufbringen der Emulsion aus Schritt b) auf ein teilchenförmiges harnstoffhaltiges Düngemittel oder Einbringen der Emulsion aus Schritt b) in ein teilchenförmiges harnstoffhaltiges Düngemittel.

14. Verfahren nach Anspruch 13, **dadurch gekennzeichnet, dass** zwischen Schritt c) und Schritt b) ein Zeitraum von maximal 60, vorzugsweise maximal 30 Sekunden, liegt.

15. Verfahren nach Anspruch 13 oder 14, **dadurch gekennzeichnet, dass** in Schritt c) ein Aufsprühen und/oder Auftrommeln der Emulsion auf das harnstoffhaltige Düngemittel erfolgt.

16. Verfahren nach einem der Ansprüche 13 bis 15, **dadurch gekennzeichnet, dass** in Schritt c) eine Emulsion gemäß einem der Ansprüche 1 bis 10 in einer solchen Menge auf das harnstoffhaltige Düngemittel aufgebracht oder in das harnstoffhaltige Düngemittel eingebracht wird, dass der Gesamtgehalt der Komponenten A und B, bezogen auf den im Düngemittel enthaltenen Harnstoff, 0,02 bis 0,38 Gew.-%, vorzugsweise 0,04 bis 0,27 Gew.- %, beträgt.

17. Verfahren nach einem der Ansprüche 13 bis 16, **dadurch gekennzeichnet, dass** in Schritt c) die Emulsion auf die Oberfläche des teilchenförmigen harnstoffhaltigen Düngemittels aufgebracht wird.

18. Harnstoffhaltiges Düngemittel, erhältlich nach dem Verfahren gemäß einem der Ansprüche 13 bis 17.

## Claims

1. Emulsion for treatment of urea-containing fertilizers, comprising an aqueous phase B and a nonaqueous phase A emulsified with phase B,
where phase A comprises at least one (thio)phosphoric acid triamide of the general formula (I) and/or (thio)phosphoric acid diamide of the general formula (II)
R¹R²N-P(X)(NH₂)₂ (I)
R¹O-P(X)(NH₂)₂ (II)
with the following definitions:
X is oxygen or sulfur,
R¹ and R² are independently hydrogen, respectively substituted or unsubstituted 2-nitrophenyl, C₁₋₁₀-alkyl, C₃₋₁₀-cycloalkyl, C₃₋₁₀-heterocycloalkyl, C₆₋₁₀-aryl, C₆₋₁₀-heteroaryl or diaminocarbonyl, where R¹ and R² together with the nitrogen atom connecting them may also form a 5- or 6-membered saturated or unsaturated heterocyclic radical that may optionally also contain one or two further heteroatoms selected from the group consisting of nitrogen, oxygen and sulfur,
as component A1, dissolved in a water-immiscible organic solvent as component A2, and
where phase B comprises 2-(N-3,4-dimethylpyrazole)succinic acid, preferably in the form of a dialkali metal salt, alkaline earth metal salt, diammonium salt or mixture thereof, as component B1, dissolved in water.

2. Emulsion as claimed in claim 1, **characterized in that** the (thio)phosphoric acid triamides of the general formula (I) used are N-alkylthiophosphoric acid triamides with the definitions of X = S and R² = H and/or N-alkylphosphoric acid triamides with the definitions of X = O and R² = H.

3. Emulsion as claimed in either of claims 1 and 2, **characterized in that** phase A comprises at least one compound containing an amino group or a substituted amino group and having a boiling point of more than 100°C, preferably an amine, more preferably selected from methyldiethanolamine, tetrahydroxypropylethylenediamine, trimethylaminoethylethanolamine, N,N,N',N'-tetramethyl-1,6-hexanediamine, N,N',N"-tris(dimethylaminopropyl)hexahydrotriazine, 2,2'-dimorpholinyldiethyl ether, N,N,N',N',N",N"-hexamethyl-1,3,5-triazine-1,3,5(2H,4H,6H)-tripropanamine, N,N,N',N'-tetrakis(2-hydroxypropyl)ethylenediamine or mixtures thereof, as component A3 in preferably at least 0.2 times the molar amount of component A1.

4. Emulsion as claimed in any of claims 1 to 3, **characterized in that** phase A further comprises a polymer in dissolved or dispersed form as component C.

5. Emulsion as claimed in any of claims 1 to 4, **characterized in that** components A1 and B1 are present in a weight ratio in the range from 1:1 to 1:6, preferably 1:1.5 to 1:5, especially 1:2 to 1:4.5.

6. Emulsion as claimed in any of claims 1 to 5, **characterized in that** component A1 used is N-(n-butyl)thiophosphoric acid triamide or a mixture of N-(n-butyl)thiophosphoric acid triamide and N-(n-propyl)thiophosphoric acid triamide.

7. Emulsion as claimed in any of claims 1 to 6, **characterized in that** component A2 is selected from water-immiscible alcohols, ethers, esters, hydrocarbons, polyalkylene polyols and ethers thereof, liquid amides or mixtures thereof, and is preferably selected from 2-propyl-1-heptanol, dimethyl phthalate, benzyl alcohol or mixtures thereof.

8. Emulsion as claimed in any of claims 1 to 7, **characterized in that** phase B has a pH in the range from 6 to 9, preferably from 7 to 8.

9. Emulsion as claimed in any of claims 1 to 8, **characterized in that** phase A comprises 15% to 35% by weight, preferably 20% to 30% by weight, especially 22% to 26.5% by weight of component A1, based on the total weight of phase A.

10. Emulsion as claimed in any of claims 1 to 9, **characterized in that** phase B comprises 20% to 60% by weight, preferably 25% to 50% by weight, especially 30% to 40% by weight, of component B1, based on the total weight of phase B.

11. Use of an emulsion as claimed in any of claims 1 to 10 as additive or coating composition for urea-containing nitrogen fertilizers.

12. Use as claimed in claim 11, **characterized in that** the emulsion is deployed on soil or plant substrate separately or simultaneously with the fertilizer or is introduced into the fertilizer or applied to the fertilizer.

13. Process for producing treated urea-containing fertilizers, comprising the steps of
a) separately producing phases A and B as defined in any of claims 1 to 10,
b) mixing phases A and B from step a) for production of an emulsion of phases A and B,
c) applying the emulsion from step b) to a particulate urea-containing fertilizer or introducing the emulsion from step b) into a particulate urea-containing fertilizer.

14. Process as claimed in claim 13, **characterized in that** there is a period of not more than 60, preferably not more than 30, seconds between step c) and step b).

15. Process as claimed in claim 13 or 14, **characterized in that** the emulsion is applied to the urea-containing fertilizer in step c) by spray and/or drum application.

16. Process as claimed in any of claims 13 to 15, **characterized in that** an emulsion as claimed in any of claims 1 to 10 is applied to the urea-containing fertilizer or introduced into the urea-containing fertilizer in step c) in such an amount that the total content of components A and B, based on the urea present in the fertilizer, is 0.02% to 0.38% by weight, preferably 0.04% to 0.27% by weight.

17. Process as claimed in any of claims 13 to 16, **characterized in that** the emulsion is applied to the surface of the particulate urea-containing fertilizer in step c).

18. Urea-containing fertilizer obtainable by the process as claimed in any of claims 13 to 17.

## Revendications

1. Émulsion pour le traitement d'engrais contenant de l'urée, contenant une phase aqueuse B et une phase non aqueuse A émulsifiée avec la phase B,
la phase A contenant au moins un triamide d'acide (thio)phosphorique de formule générale (I) et/ou au moins un diamide d'acide (thio)phosphorique de formule générale (II)
R¹R²N-P(X)(NH₂)₂ (I)
R¹O-P(X)(NH₂)₂ (II)
X signifiant oxygène ou soufre
R¹ et R² signifiant indépendamment l'un de l'autre hydrogène, 2-nitrophényle, C₁₋₁₀-alkyle, C₃₋₁₀-cycloalkyle, C₃₋₁₀-hétérocycloalkyle, C₆₋₁₀-aryle, C₆₋₁₀-hétéroaryle ou diaminocarbonyle, à chaque fois substitué ou non substitué, R¹ et R² pouvant également former, conjointement avec l'atome d'azote auquel ils sont liés, un radical hétérocyclique saturé ou insaturé à 5 ou 6 chaînons qui peut éventuellement également contenir un ou deux hétéroatomes supplémentaires choisis dans le groupe constitué par azote, oxygène et soufre,
en tant que composant A1, dissous dans un solvant organique non miscible à l'eau en tant que composant A2,
et la phase B contenant de l'acide 2-(N-3,4-diméthylpyrazole)succinique, qui est présent de préférence en tant que di-sel alcalin, sel alcalino-terreux, di-sel d'ammonium ou un mélange correspondant, en tant que composant B1, dissous dans de l'eau.

2. Émulsion selon la revendication 1, **caractérisé en ce qu'**en tant que triamides d'acides (thio)phosphoriques de formule générale (I), des triamides d'acides N-alkylthiophosphoriques avec les significations X = S et R² = H et/ou des triamides d'acides N-alkylphosphoriques avec les significations X = O et R² = H, sont utilisés.

3. Émulsion selon l'une quelconque des revendications 1 et 2, **caractérisée en ce que** la phase A contient au moins un composé, contenant un groupe amino ou un groupe amino substitué, doté d'un point d'ébullition de plus de 100 °C, de préférence une amine, particulièrement préférablement choisie parmi la méthyldiéthanolamine, la tétrahydroxypropyléthylènediamine, la triméthylaminoéthyléthanolamine, la N,N,N',N'-tétraméthyl-1,6-hexanediamine, la N,N',N"-tris(diméthylaminopropyl)hexahydrotriazine, le 2,2'-dimorpholinyldiéthyléther, la N,N,N',N',N",N"-hexa-méthyl-1,3,5-triazine-1,3,5(2H,4H,6H)-tripropanamine, la N,N,N',N'-tétrakis(2-hydro-xypropyl)éthylènediamine ou des mélanges correspondants, en tant que composant A3, de préférence en une quantité au moins égale à 0,2 fois la quantité molaire du composant A1.

4. Émulsion selon l'une quelconque des revendications 1 à 3, **caractérisée en ce que** la phase A contient de plus un polymère sous forme dissoute ou dispersée en tant que composant C.

5. Émulsion selon l'une quelconque des revendications 1 à 4, **caractérisée en ce que** les composants A1 et B1 sont présents en un rapport en poids dans la plage de 1 : 1 à 1 : 6, de préférence de 1 : 1,5 à 1 : 5, en particulier de 1 : 2 à 1 : 4,5.

6. Émulsion selon l'une quelconque des revendications 1 à 5, **caractérisée en ce qu'**en tant que composant A1, le triamide de l'acide N-(n-butyl)-thiophosphorique ou un mélange de triamide de l'acide N-(n-butyl)-thiophosphorique et de triamide de l'acide N-(n-propyl)-thiophosphorique est utilisé.

7. Émulsion selon l'une quelconque des revendications 1 à 6, **caractérisée en ce que** le composant A2 est choisi parmi des alcools, des éthers, des esters, des hydrocarbures, des polyalkylènepolyols et leurs éthers, des amides liquides ou des mélanges correspondants, non miscibles à l'eau, et de préférence choisi parmi le 2-propyl-1-heptanol, le phtalate de diméthyle, l'alcool benzylique ou des mélanges correspondants.

8. Émulsion selon l'une quelconque des revendications 1 à 7, **caractérisée en ce que** la phase B présente une valeur de pH dans la plage de 6 à 9, de préférence de 7 à 8.

9. Émulsion selon l'une quelconque des revendications 1 à 8, **caractérisée en ce que** la phase A contient 15 à 35 % en poids, de préférence 20 à 30 % en poids, en particulier 22 à 26,5 % en poids du composant A1, par rapport au poids total de la phase A.

10. Émulsion selon l'une quelconque des revendications 1 à 9, **caractérisée en ce que** la phase B contient 20 à 60 % en poids, de préférence 25 à 50 % en poids, en particulier 30 à 40 % en poids du composant B1, par rapport au poids total de la phase B.

11. Utilisation d'une émulsion selon l'une quelconque des revendications 1 à 10 en tant qu'additif ou agent de revêtement pour des engrais azotés contenant de l'urée.

12. Utilisation selon la revendication 11, **caractérisée en ce que** l'émulsion est épandue séparément ou simultanément avec l'engrais sur un sol ou un substrat végétal ou est introduite dans l'engrais ou appliquée sur l'engrais.

13. Procédé de préparation d'engrais contenant de l'urée traités, comprenant les étapes
a) préparation séparée des phases A et B, telles qu'elles sont définies dans l'une quelconque des revendications 1 à 10,
b) mélange des phases A et B de l'étape a) pour la préparation d'une émulsion des phases A et B,
c) application de l'émulsion de l'étape b) sur un engrais particulaire contenant de l'urée ou introduction de l'émulsion de l'étape b) dans un engrais particulaire contenant de l'urée.

14. Procédé selon la revendication 13, **caractérisé en ce qu'**entre l'étape c) et l'étape b) se situe une période de temps d'au maximum 60, de préférence d'au maximum 30 secondes.

15. Procédé selon la revendication 13 ou 14, **caractérisé en ce que** dans l'étape c) une vaporisation et/ou un tonnelage de l'émulsion sur l'engrais contenant de l'urée est réalisé(e).

16. Procédé selon l'une quelconque des revendications 13 à 15, **caractérisé en ce que** dans l'étape c), une émulsion selon l'une quelconque des revendications 1 à 10 est appliquée sur l'engrais contenant de l'urée ou est introduite dans l'engrais contenant de l'urée en une telle quantité que la teneur totale des composants A et B, par rapport à l'urée contenue dans l'engrais, est de 0,02 à 0,38 % en poids, de préférence de 0,04 à 0,27 % en poids.

17. Procédé selon l'une quelconque des revendications 13 à 16, **caractérisé en ce que** dans l'étape c), l'émulsion est appliquée sur la surface de l'engrais particulaire contenant de l'urée.

18. Engrais contenant de l'urée, qui peut être obtenu par le procédé selon l'une quelconque des revendications 13 à 17.
